# EUROPEAN PATENT SPECIFICATION

(11) **EP 2 175 466 B1**
(45) Date of publication and mention of the grant of the patent: **26.02.2014**
(21) Application number: 09167698.1
(22) Date of filing: 12.08.2009
(51) Int. Cl.: H01H 13/83

(54) **Backlighting apparatus for keypad assembly**
Rückbeleuchtungsvorrichtung für eine Tastenanordnung
Appareil de rétroéclairage pour ensemble de clavier

(30) Priority: 10.10.2008 KR 20080099405
(43) Date of publication of application: 14.04.2010
(73) Proprietor: Samsung Electronics Co., Ltd., Suwon-si, Gyeonggi-do, 443-742 (KR)
(72) Inventor: Seol, Dong-Beom, Gyeonggi-do (KR)
(74) Representative: Birchenough, Lewis

(56) References cited:
- GB-A- 2 065 373
- US-A- 5 083 240
- US-A- 5 130 897
- US-A1- 2008 019 115

## Description

### BACKGROUND OF THE INVENTION

### Field of the Invention:

The present invention relates to a backlighting apparatus for a keypad assembly. More particularly, the present invention relates to a backlighting apparatus for a keypad assembly in which a waveguide portion is formed between rubbers of a keypad to guide light from light emitting devices over an entire surface of the keypad.

### Description of the Related Art:

Conventional 'portable communication devices' refer to devices by which a user can wirelessly communicate with another party while carrying the portable communication device. The portable communication devices include a HandHeld Phone (HHP), a Cordless Telephone-2 (CT-2) cellular phone, a digital phone, a Personal Communications Service (PCS) phone, a Personal Digital Assistant (PDA) and the like. The portable communication devices are also classified into several types according to their appearance, such as a bar-type wireless terminal, a flip-type wireless terminal and a folder-type wireless terminal. The conventional portable communication devices indispensably include an antenna device, a data input/output device and a data transmission/reception device. As the data input/output device, a keypad is generally used, with which a user can input data by pressing buttons on the keypad.

The keypad used to input data includes a rubber material and has a plate shape, a plurality of key buttons formed on a top surface of the rubber material and having letters and the like printed on the top surfaces thereof, and a plurality of pressing protrusions formed on a bottom surface of the rubber material being opposed to the top surface of the rubber material. Commonly, the portable communication devices have a plurality of (e.g., 15 to 20) Light Emitting Devices (LEDs) for backlighting the keypad. Here, the LEDs consist of top-view LEDs.

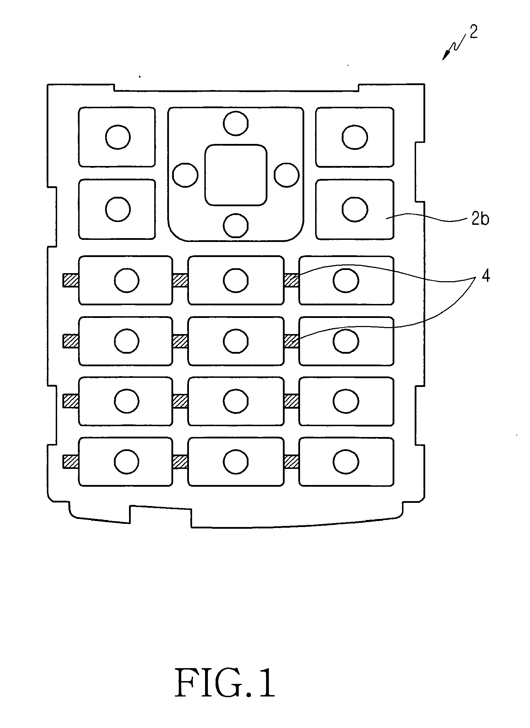

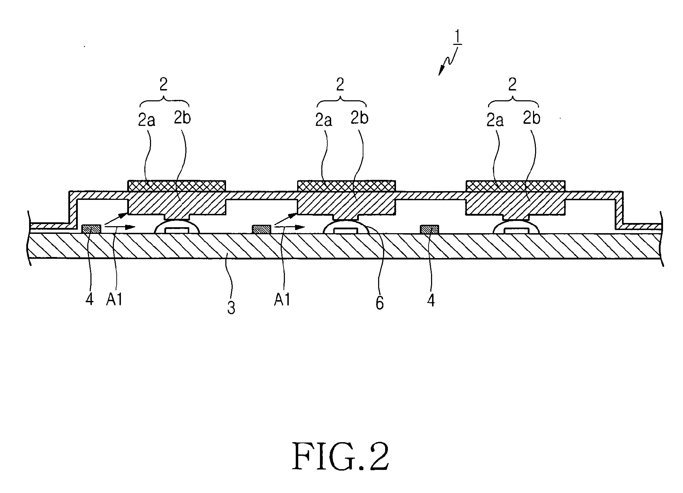

With reference to FIGs. 1 and 2, a conventional backlighting apparatus 1 for a keypad assembly will be described below. As illustrated in FIGs. 1 and 2, a plurality of dome switches 6 and a plurality of LEDs 4 are provided on a printed circuit board 3. The LEDs 4 are provided next to key buttons 2a on a keypad 2 to emit light A1 toward the key buttons 2a , thereby lighting up the key buttons 2a on the keypad 2.

A plurality of key buttons 2a and a plurality of rubbers 2b are provided on the keypad 2. The rubbers 2b are formed of silicon and/or Polycarbonate (PC) materials.

However, as the conventional backlighting apparatus for a keypad assembly uses a large number of LEDs, installation spaces should be provided separately. Since luminance of the keypad mainly depends on the LEDs, the entire luminance of the keypad is low. If the number of LEDs is increased to solve the low luminance of the keypad, cost of production may increase.

Since the conventional backlighting apparatus for a keypad assembly has a structure in which light from the LEDs provided next to the key buttons on the keypad is emitted toward the key buttons, key buttons provided near the LEDs are brighter due to high luminance. However, key buttons located far from the LEDs are darker due to low luminance. In other words, light from the LEDs may not uniformly illuminate the entire surface of the keypad because of a distance deviation, and the key buttons on the keypad located far from the LEDs are darker.

Therefore, a need exists for an apparatus for reducing a deviation of light by guiding light from the LEDs to a surface of a keypad.

Other light guide arrangements are described in US 5,130,897, GB 2065373, US 2008/0019115 and US 5,083,240.

### SUMMARY OF THE INVENTION

An aspect of the present invention is to address at least the above-mentioned problems and/or disadvantages and to provide at least the advantages described below, including more uniformly lighting the surface of the keypad and reducing power consumption and production cost of the product.

According to an aspect of the present invention, a keypad assembly backlighting apparatus is provided. The backlighting apparatus includes a keypad comprising a plurality of key buttons, a plurality of respective rubbers, and keypad portions formed between the key buttons, each key button being formed on a top surface of a respective rubber, the rubbers for connecting the key buttons to a plurality of respective dome switches located beneath the rubbers; a plurality of Light Emitting Devices (LEDs) for emitting light to illuminate the keypad assembly; a printed circuit board comprising the LEDs and the plurality of dome switches; and a waveguide portion formed between the rubbers, on top of the LEDs and beneath the keypad portions formed between the key buttons, the waveguide portion being arranged to guide the light emitted from the LEDs to the rubbers.

The waveguide portion may have a lattice shape.

The waveguide portion may be coupled with the keypad as to comprise one body.

The waveguide portion may be formed of silicon and Polycarbonate (PC) materials.

The waveguide portion may be provided in intersecting spaces of the rubbers.

The waveguide portion may be formed of a waveguide sheet.

The waveguide portion guides the light from the LEDs in an up direction, a down direction, a left direction and a right direction.

The LEDs may be provided under intersections on the waveguide portion.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:
FIG. 1 is a plane view illustrating a structure of a conventional backlighting apparatus for a keypad assembly;
FIG. 2 is a cross sectional view illustrating operation of a conventional backlighting apparatus for a keypad assembly;
FIG. 3 is a plane view illustrating a structure of a backlighting apparatus for a keypad assembly according to an exemplary embodiment of the present invention;
FIG. 4 is a cross sectional view illustrating operation of a backlighting apparatus for a keypad assembly according to an exemplary embodiment of the present invention; and
FIG. 5 is a plane view illustrating operation of a backlighting apparatus for a keypad assembly according to an exemplary embodiment of the present invention.

Throughout the drawings, the same drawing reference numerals will be understood to refer to the same elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention provide a backlighting apparatus for a keypad assembly in which a waveguide portion is formed between rubbers of a keypad to guide light from light emitting devices over a surface of the keypad.

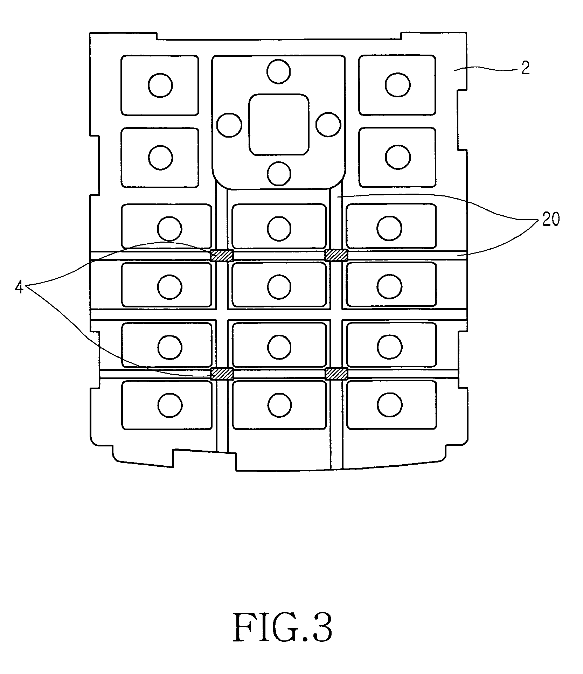

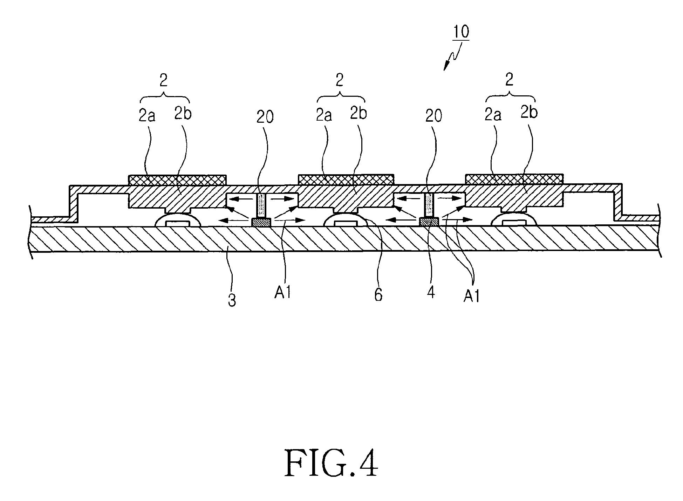

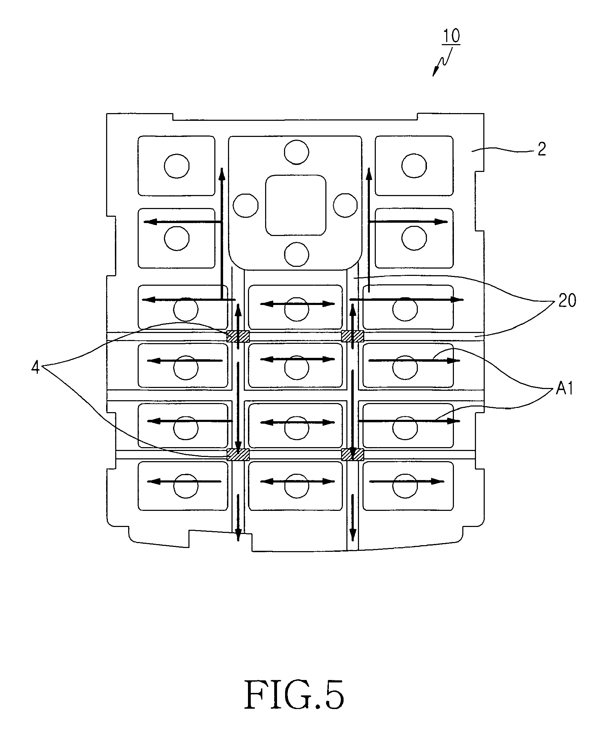

FIG. 3 is a plane view illustrating a structure of a backlighting apparatus for a keypad assembly according to an exemplary embodiment of the present invention. FIG. 4 is a cross sectional view illustrating operation of a backlighting apparatus for a keypad assembly according to an exemplary embodiment of the present invention. FIG. 5 is a plane view illustrating operation of a backlighting apparatus for a keypad assembly according to an exemplary embodiment of the present invention.

Referring to FIGs. 3 to 5, a backlighting apparatus 10 for a keypad assembly includes a keypad 2 consisting of a plurality of key buttons 2a and a plurality of rubbers 2b, a plurality of Light Emitting Devices (LEDs) 4, a plurality of dome switches 6 and a waveguide portion 20.

The waveguide portion 20, as illustrated in FIG. 3, is formed between the rubbers 2b to guide light to all of the rubbers 2b provided near the LEDs 4 and the rubbers 2b located far from the LEDs 4. The waveguide portion 20 is formed in a lattice shape in one body with the keypad 2. In an exemplary implementation, the waveguide portion 20 is made of silicon and polycarbonate (PC) materials.

The waveguide portion 20 may be provided in intersecting spaces of the rubbers 2b to guide light A1 from the LEDs 4 between the respective rubbers 2b.

The waveguide portion 20 may also be formed of a waveguide sheet to guide the light A1 from the LEDs 4.

The waveguide portion 20, as illustrated in FIG. 5, may be adapted to guide the light A1 from the LEDs 4 in the an up direction, a down direction, a left direction and a right direction. The LEDs 4 are provided under intersections on the waveguide portion 20 to emit the light A1 with a small number of LEDs 4 using the waveguide portion 20.

With reference to FIGs. 3 to 5, a description will now be made of an operation of the backlighting apparatus of a keypad assembly according to an exemplary embodiment of the present invention.

Referring to FIGs. 3 and 4, the backlighting apparatus 10 of a keypad assembly includes the keypad 2 consisting of a plurality of key buttons 2a and a plurality of rubbers 2b, a plurality of LEDs 4, a plurality of dome switches 6 and the waveguide portion 20.

The waveguide portion 20 may be located between the respective rubbers 2b to guide the light A1 to all of rubbers 2b provided near the LEDs 4 and rubbers 2b located far from the LEDs 4.

The waveguide portion 20 may also have a lattice shape coupled with the keypad 2 to comprise a single body. The waveguide portion 20 may be provided in intersecting spaces of the rubbers 2b.

In this state, as illustrated in FIGs. 3 and 4, the waveguide portion 20 is mounted over the LEDs 4 and the dome switches 6. For example, four LEDs 4, which is a significantly lower number than that found in a conventional backlighting apparatus, are installed on a printed circuit board 3. That is, using the waveguide portion 20, fewer LEDs are needed to provide adequate backlighting as compared to a conventional device.

In an exemplary implementation, four LEDs 4 are installed under intersections on the waveguide portion 20 that has a lattice shape.

In this state, as illustrated in FIG. 5, if power is supplied to the LEDs 4, light A1 emitted from the LEDs 4 may be guided in the up, down, left and right directions by the waveguide portion 20, illuminating the respective rubbers 2b.

The waveguide portion 20 may uniformly illuminate all of rubbers 2b neighboring the LEDs 4 as well as rubbers 2b located far from the LEDs 4.

Conventionally, a large number of LEDs 4 are installed near the rubbers 2b on the keypad 2. In comparison, in an exemplary embodiment of the present invention, fewer LEDs 4 are provided under intersections on the waveguide portion 20 that includes a lattice shape, guiding the light A1 from the LEDs 4 in the up, down, left and right directions through the waveguide portion 20, thereby reducing power consumption and production cost.

The waveguide portion 20 may be made of silicon and polycarbonate (PC) materials, and formed of a waveguide sheet.

## Claims

1. A keypad assembly backlighting apparatus (10) comprising:
a keypad (2) comprising a plurality of key buttons (2a), a plurality of respective rubbers (2b), and keypad portions formed between the key buttons, each key button (2a) being formed on a top surface of a respective rubber (2b), the rubbers (2b) for connecting the key buttons (2a) to a plurality of respective dome switches (6) located beneath the rubbers (2b);
a plurality of Light Emitting Devices (LEDs) (4) for emitting light to illuminate the keypad assembly;
a printed circuit board (3) comprising the LEDs (4) and the plurality of dome switches (6), **characterized in that** it further comprises:
a waveguide portion (20) formed between the rubbers (2b), on top of the LEDs and beneath the keypad portions formed between the key buttons, the waveguide portion (20) being arranged to guide the light emitted from the LEDs (4) to the rubbers (2b).

2. The apparatus of claim 1, wherein the waveguide portion (20) comprises a lattice shape.

3. The apparatus of claim 1, wherein the waveguide portion (20) is coupled with the keypad (2) to form one body.

4. The apparatus of claim 1, wherein the waveguide portion (20) comprises silicon and Polycarbonate (PC) materials.

5. The apparatus of claim 1, wherein the waveguide portion (20) is provided in intersecting spaces of the rubbers (2b).

6. The apparatus of claim 1, wherein the waveguide portion (20) is formed of a waveguide sheet.

7. The apparatus of claim 1, wherein the waveguide portion (20) guides the emitted light from the LEDs (4) in an up direction, a down direction, a left direction and a right direction.

8. The apparatus of claim 1, wherein the LEDs (4) are provided under intersections on the waveguide portion (20).

## Patentansprüche

1. Hintergrundbeleuchtungsvorrichtung (10) für eine Tastenfeldbaugruppe, die Folgendes umfasst:
ein Tastenfeld (2), das eine Vielzahl von Tasten (2a) umfasst, eine Vielzahl von jeweiligen Gummis (2b) und Tastenfeldabschnitte, die zwischen den Tasten gebildet sind, wobei jede Taste (2a) auf einer Oberseite eines entsprechenden Gummis (2b) gebildet ist, wobei die Gummis (2b) zum Verbinden der Tasten (2a) mit einer Vielzahl von jeweiligen Schnappscheiben (6) unterhalb der Gummis (2b) angeordnet sind;
eine Vielzahl von lichtemittierenden Vorrichtungen (LEDs) (4) zum Emittieren von Licht, um die Tastenfeldbaugruppe zu beleuchten;
eine Leiterplatte (3), die die LEDs (4) und die Vielzahl von Schnappscheiben (6) umfasst, **dadurch gekennzeichnet, dass** sie ferner Folgendes umfasst:
einen Wellenleiterabschnitt (20), der zwischen den Gummis (2b) auf der Oberseite der LEDs und unter den Tastenfeldabschnitten gebildet ist, die zwischen den Tasten gebildet sind, wobei der Wellenleiterabschnitt (20) so angeordnet ist, dass er das Licht, das von den LEDs (4) emittiert wird, zu den Gummis (2b) leitet.

2. Vorrichtung nach Anspruch 1, wobei der Wellenleiterabschnitt (20) eine Gitterform aufweist.

3. Vorrichtung nach Anspruch 1, wobei der Wellenleiterabschnitt (20) mit dem Tastenfeld (2) gekoppelt ist, um einen Körper zu bilden.

4. Vorrichtung nach Anspruch 1, wobei der Wellenleiterabschnitt (20) aus Silizium- und Polycarbonat- (PC) Materialien besteht.

5. Vorrichtung nach Anspruch 1, wobei der Wellenleiterabschnitt (20) in sich kreuzenden Freiräumen der Gummis (2b) bereitgestellt ist.

6. Vorrichtung nach Anspruch 1, wobei der Wellenleiterabschnitt (20) aus einer Wellenleiterbahn gebildet ist.

7. Vorrichtung nach Anspruch 1, wobei der Wellenleiterabschnitt (20) das emittierte Licht von den LEDs (4) in einer Aufwärtsrichtung, einer Abwärtsrichtung, einer Linksrichtung und einer Rechtsrichtung leitet.

8. Vorrichtung nach Anspruch 1, wobei die LEDs (4) unter Kreuzungspunkten auf dem Wellenleiterabschnitt (20) vorgesehen sind.

## Revendications

1. Appareil de rétroéclairage pour ensemble clavier (10) comprenant :
un clavier (2) comportant une pluralité de boutons de touches (2a), une pluralité de caoutchoucs respectifs (2b), et des portions clavier lesquelles sont formées entre les boutons de touches, chaque bouton de touche (2a) étant formé sur une surface supérieure d'un caoutchouc respectif (2b), les caoutchoucs (2b) servant à connecter les boutons de touches (2a) à une pluralité de commutateurs en dôme respectifs (6) positionnés sous les caoutchoucs (2b) ;
une pluralité de diodes électroluminescentes (DEL) (4) pour émettre de la lumière afin d'éclairer l'ensemble clavier ;
une plaquette à circuits imprimés (3) comportant les DEL (4) et la pluralité de commutateurs en dôme (6), **caractérisé en ce qu'**il comprend en outre :
une portion guide d'ondes (20) formée entre les caoutchoucs (2b), sur la partie supérieure des DEL et sous les portions clavier prévues entre les boutons de touches, la portion guide d'ondes (20) étant agencée de façon à guider la lumière émise à partir des DEL (4) vers les caoutchoucs (2b).

2. Appareil selon la revendication 1, la portion guide d'ondes (20) comprenant une forme en treillis.

3. Appareil selon la revendication 1, la portion guide d'ondes (20) étant couplée au clavier (2) afin de former un corps.

4. Appareil selon la revendication 1, la portion guide d'ondes (20) comprenant des matières en silicone et polycarbonate (PC).

5. Appareil selon la revendication 1, la portion guide d'ondes (20) étant prévue dans des espaces d'intersection des caoutchoucs (2b).

6. Appareil selon la revendication 1, la portion guide d'ondes (20) étant constituée d'une feuille de guide d'ondes.

7. Appareil selon la revendication 1, la portion guide d'ondes (20) assurant le guidage de la lumière émise à partir des DEL (4) suivant un sens ascendant, un sens descendant, un sens vers la gauche et un sens vers la droite.

8. Appareil selon la revendication 1, les DEL (4) étant prévues sous des intersections sur la portion guide d'ondes (20).
